# EUROPÄISCHE PATENTSCHRIFT

(11) **EP 2 830 733 B1**
(45) Veröffentlichungstag und Bekanntmachung des Hinweises auf die Patenterteilung: **21.02.2018**
(21) Anmeldenummer: 13709329.0
(22) Anmeldetag: 07.03.2013
(51) Int. Cl.: B01D 35/30

(54) **FILTERGEHÄUSE FÜR AUSTAUSCHBARE FILTER**
FILTER HOUSING FOR REPLACEABLE FILTERS
BOÎTIER POUR FILTRES INTERCHANGEABLES

(30) Priorität: 30.03.2012 DE 202012003252 U
(43) Veröffentlichungstag der Anmeldung: 04.02.2015
(73) Patentinhaber: Sartorius Stedim Biotech GmbH, 37079 Göttingen (DE)
(72) Erfinder: MEYER, Theo, 37136 Holzerode (DE); WEBER, Christian, 37235 Hessisch Lichtenau (DE)
(74) Vertreter: Stehl, Astrid
(86) Internationale Anmeldenummer: PCT/EP2013/000683
(87) Internationale Veröffentlichungsnummer: WO 2013/143651

(56) Entgegenhaltungen:
- DE-C1- 19 828 840
- US-A- 4 120 794
- US-A1- 2009 184 063

## Beschreibung

### Gebiet der Erfindung

Die Erfindung betrifft ein Filtergehäuse für austauschbare Filter mit einer Gehäusebasis zur Aufnahme des Filters und einem den Filter überspannenden Gehäusedom, wobei die Gehäusebasis und der Gehäusedom über eine Aseptik-Klemmverbindung miteinander verbindbar sind, die gehäusebasisseitig einen Nutklemmstutzen und gehäusedomseitig einen Bundklemmstutzen aufweist, welche über eine Klammer in ihrer verbundenen Position gegeneinander fixiert sind, wobei der Nutklemmstutzen eine Dichtungsnut mit einer Dichtung aufweist, über die der Nutklemmstutzen gegenüber dem Bundklemmstutzen abdichtbar ist, wobei die Gehäusebasis einen Anschluss zur Zufuhr von zu filtrierender Flüssigkeit und einen Anschluss zur Abfuhr von filtrierter Flüssigkeit aufweist, und wobei die Gehäusebasis quer zur Gehäuselängsachse eine der Stirnfläche des eingesetzten Filters benachbarte Basisfläche aufweist.

### Stand der Technik

Aus dem Firmenprospekt "Products and Solutions for the Biopharmaceutical Industry" der Sartorius Stedim Biotech GmbH ist ein Filtergehäuse zur Filtration von Flüssigkeiten in der biopharmazeutischen Industrie bekannt.
Filtergehäuse für austauschbare Filter besteht aus einer Gehäusebasis zur Aufnahme des Filters und einem den Filter überspannenden Gehäusedom, wobei die Gehäusebasis und der Gehäusedom über eine Aseptik-Klemmverbindung miteinander verbunden werden. Die Gehäusebasis weist einen Nutklemmstutzen auf, der über eine Klammer mit einem Bundklemmstutzen des Gehäusedoms verbunden wird. Dabei weist der Nutklemmstutzen eine Dichtungsnut mit einer O-RingDichtung auf, über die der Nutklemmstutzen gegenüber dem Bundklemmstutzen abgedichtet ist. Die Gehäusebasis weist einen Anschluss zur Zufuhr von zu filtrierender Flüssigkeit und einen Anschluss zur Abfuhr von filtrierter Flüssigkeit auf, wobei die Gehäusebasis quer zur Gehäuselängsachse eine der Stirnfläche des eingesetzten Filters benachbarte Basisfläche aufweist, die eine zentrale Öffnung zu dem in den in den Anschluss zur Abfuhr der filtrierten Flüssigkeit mündenden Abflusskanal aufweist.

Nachteilig bei dem bekannten Filtergehäuse, das in seiner aseptischen Klemmverbindung der DIN 11864-3 und DIN 11853-3 entspricht und sich grundsätzlich bewährt hat, ist, dass beim Entleeren des Filtergehäuses Flüssigkeit auf der Basisfläche zur Stirnfläche des Filters hin zurückbleiben kann.

Die US 4,120,794 offenbart ein Filtergehäuse bei dem die Filterkerze über eine Feder zum Fixieren am Bodenflansch gehalten wird. Eine aseptische Verbindung wird nicht offenbart, d.h. das Medium welches im Gehäuse ansteht, fließt vom Innenraum zwischen die beiden Gehäuseteile aus Bodenflansch und Haubenklemmstutzen bis zum O-Ring. Der O-Ring befindet sich dabei in einer Standard-Rechteck-O-Ring-Nut. Nach dem Ablassen des Mediums aus dem Gehäuse bleibt der Teil des Mediums, der sich in dem Zwischenraum befindet, stehen und kann nicht abfließen. Darüber hinaus sammelt sich das Medium in der O-Ring-Nut. Beim Leerlaufen bleibt das Medium außerdem im Eingang stehen, da kein Entleerungsstutzen vorgesehen ist.

### Aufgabenstellung

Aufgabe der vorliegenden Erfindung ist es daher, das bekannte Filtergehäuse so zu verbessern, dass sowohl beim Filtrieren als auch beim Reinigen bzw. Spülen, möglichst keine Flüssigkeitsreste zurückbleiben.

### Darstellung der Erfindung

Die Aufgabe wird in Verbindung mit dem Oberbegriff des Anspruches 1 dadurch gelöst, dass die Basisfläche nach innen zur Gehäuselängsachse hin gegenüber einer quer zur Gehäuselängsachse angeordneten horizontalen Ebene geneigt ist. Die Dichtungsnut ist zur Gehäuselängsachse hin von einem Innenkragen mit einer umlaufenden Innenfläche begrenzt, die die äußere Begrenzung für die Basisfläche bildet. Die Innenfläche verläuft dabei parallel zur Gehäuselängsachse, das heißt sie verläuft im Wesentlichen vertikal und trägt zu einem sicheren Flüssigkeitsabfluss bei.

Durch die Neigung der Basisfläche zur Gehäuselängsachse bzw. zu ihrer zentralen Öffnung hin, können auch letzte Reste von Flüssigkeit auf der Basisfläche von selbst abfließen.

Gemäß einer bevorzugten Ausführungsform der Erfindung ist die Basisfläche ringförmig mit einer zentralen Öffnung zu einem Flüssigkeitsabfluss hin ausgebildet.

Grundsätzlich ist es möglich, die Basisfläche zur Dichtungsnut bzw. deren Begrenzung zu erhöhen oder die Basisfläche tiefer zu setzen und zur Gehäuselängsachse hin zu neigen bzw. abfallen zu lassen.

Gemäß einer weiteren bevorzugten Ausführungsform der Erfindung ist die Basisfläche zur Gehäuselängsachse hin um einen Winkel geneigt ist, der größer ist als 2° und weiter bevorzugt größer ist als 4°. Als besonders günstig hat sich ein Winkel von 5° erwiesen.

Nach einer weiteren bevorzugten Ausführungsform der Erfindung ist die Dichtung als eine O-Ringdichtung ausgebildet.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:

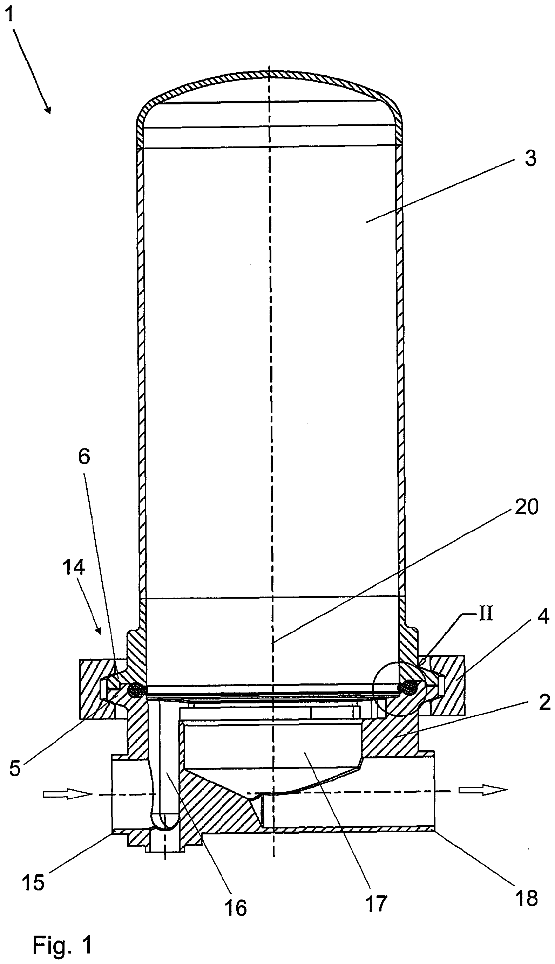

- Figur 1:: eine Seitenansicht eines Filtergehäuses im Schnitt;

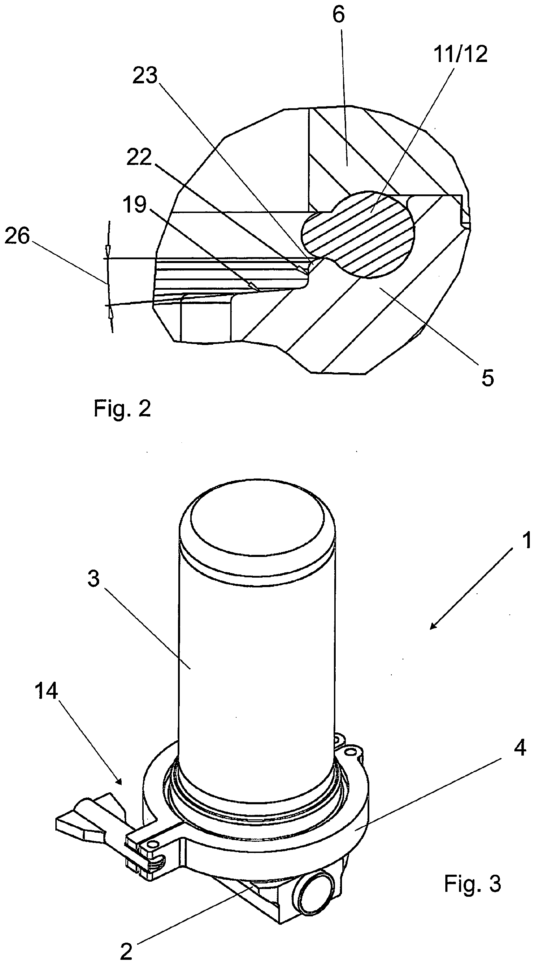

- Figur 2:: eine vergrößerte Darstellung der Einzelheit II aus Figur 1;
- Figur 3:: eine räumliche Ansicht eines Filtergehäuses in verkleinerter Darstellung;

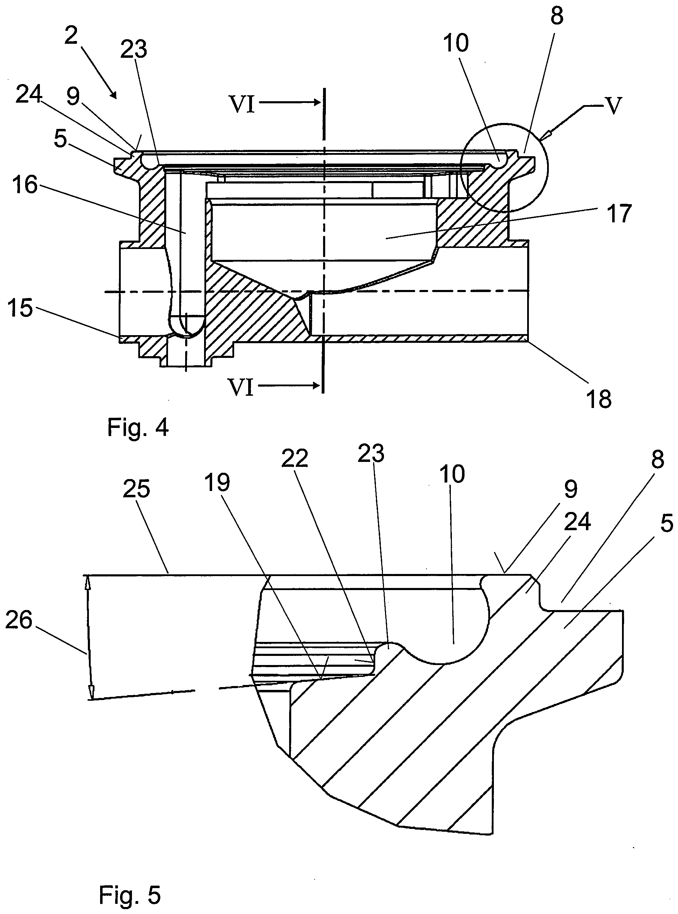

- Figur 4:: eine Seitenansicht der Gehäusebasis von Figur 1 im Schnitt;
- Figur 5:: eine vergrößerte Darstellung der Einzelheit V von Figur 4;

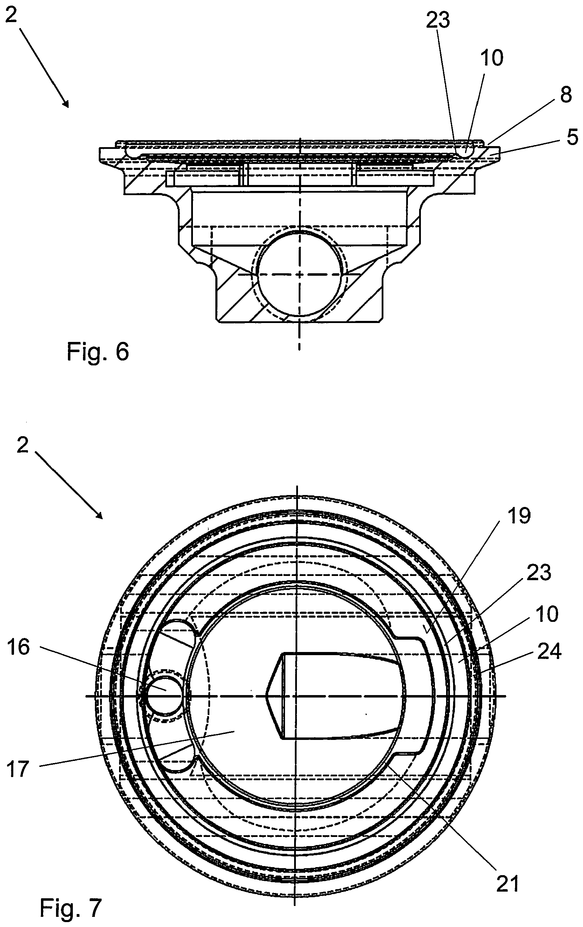

- Figur 6:: eine Seitenansicht der Gehäusebasis von Figur 4 entlang der Linie VI-VI geschnitten;
- Figur 7:: eine Draufsicht auf die Gehäusebasis von Figur 4;

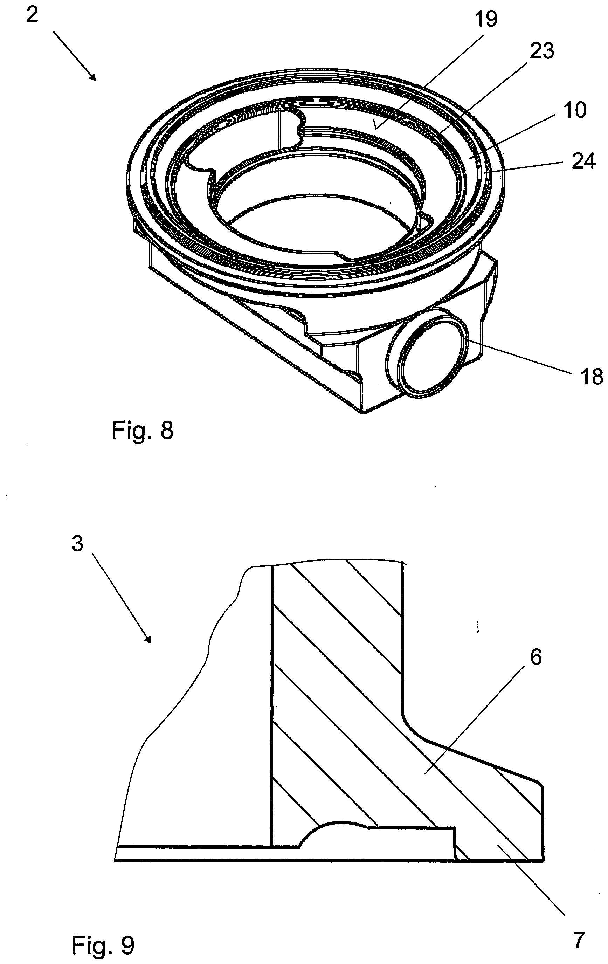

- Figur 8:: eine räumliche Darstellung der Gehäusebasis von Figur 4; und
- Figur 9:: eine vergrößerte Darstellung des Gehäusedoms von Figur 1 im Schnitt und Ausriss.

### Beschreibung der Ausführungsbeispiele

Ein Filtergehäuse 1 besteht im Wesentlichen aus einer Gehäusebasis 2, einem Gehäusedom 3, einer Klammer 4 und einer Dichtung 11.

Die Gehäusebasis 2 weist zum Gehäusedom 3 hin einen Nutklemmstutzen 5 auf. Der Gehäusedom 3 weist zur Gehäusebasis 2 hin einen Bundklemmstutzen 6 mit einem umlaufenden Bund 7 auf, der in eine umlaufende Nut 8 des Nutklemmstutzens 5 eingreift. Die Nut 8 ist radial nach außen geöffnet. Der Nutklemmstutzen 5 weist an seiner Stirnfläche 9 eine Aufnahmenut/Dichtungsnut 10 für eine Dichtung 11, die im Ausführungsbeispiel als eine O-Ringdichtung 12 ausgebildet ist, auf.

Der Nutklemmstutzen 5 und der Bundklemmstutzen 6 sind über die Dichtung 11 gegeneinander abdichtbar und werden in an sich bekannter Weise von einer Klammer 13 gegeneinander gepresst und fixiert. Damit sind die Gehäusebasis 2 und der Gehäusedom 3 über eine Aseptik-Klemmverbindung 14, wie sie aus der DIN 11864-3 oder als eine Hygieneverbindung aus der DIN 11853-3 bekannt ist, verbunden.

Die Gehäusebasis 2 weist einen seitlichen Anschluss 15 zur Fluidzufuhr, d.h. zur Zufuhr von zu filtrierender Flüssigkeit, auf. Der Anschluss 15 geht in einen in vertikaler Richtung verlaufenden Zuflusskanal 16 über und führt einem nicht dargestellten Filter die zu filtrierende Flüssigkeit zu.

Die Gehäusebasis 2 weist einen zentralen in vertikaler Richtung verlaufenden Abflusskanal 17 auf, der in einen horizontalen Anschluss 18 zur Fluidabfuhr übergeht. Zum Gehäusedom 3 hin weist die Gehäusebasis 2 eine ringförmige Basisfläche 19 auf. Zu der Gehäuselängsachse 20 hin wird die Basisfläche 19 von ihrer zentralen umlaufenden Abflussöffnung 21 begrenzt. Zur Aufnahmenut 10 der Dichtung 11 hin wird die Basisfläche 19 von einer umlaufenden Innenfläche 22 eines Innenkragens 23 begrenzt. Zwischen dem Innenkragen 23 und einem zum Innenkragen 23 nach außen hin beabstandeten Außenkragen 24 ist die Aufnahmenut 10 für die O-Ringdichtung 12 angeordnet.

Die Basisfläche 19 ist gegenüber einer quer zur Gehäuselängsachse 20 verlaufenden horizontalen Ebene 25 um einen Winkel 26 von 5° geneigt, d.h. sie fällt zur Gehäuselängsachse 20 hin ab.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 1: Filtergehäuse
- 2: Gehäusebasis
- 3: Gehäusedom
- 4: Klammer
- 5: Nutklemmstutzen
- 6: Bundklemmstutzen
- 7: Bund von 6
- 8: Nut von 5
- 9: Stirnfläche von 5
- 10: Aufnahmenut/Dichtungsnut
- 11: Dichtung
- 12: O-Ringdichtung von 11
- 13: Klammer
- 14: Aseptik-Klemmverbindung
- 15: Anschluss von 2
- 16: Zuflusskanal
- 17: Abflusskanal
- 18: (horizontaler) Abschluss
- 19: Basisfläche
- 20: Gehäuselängsachse
- 21: Abflussöffnung von 19
- 22: umlaufende Innenfläche
- 23: Innenkragen von 2
- 24: Außenkragen von 2
- 25: horizontale Ebene
- 26: Winkel

## Patentansprüche

1. Filtergehäuse (1) für austauschbare Filter mit einer Gehäusebasis (2) zur Aufnahme des Filters und einem den Filter überspannenden Gehäusedom (3), wobei die Gehäusebasis (2) und der Gehäusedom (3) über eine Aseptik-Klemmverbindung (14) miteinander verbindbar sind, die gehäusebasisseitig einen Nutklemmstutzen (5) und gehäusedomseitig einen Bundklemmstutzen (6) aufweist, welche über eine Klammer (4) in ihrer verbundenen Position gegeneinander fixiert sind, wobei der Nutklemmstutzen (5) eine Dichtungsnut (10) mit einer Dichtung (11) aufweist, über die der Nutklemmstutzen (5) gegenüber dem Bundklemmstutzen (6) abdichtbar ist, wobei die Gehäusebasis (2) einen Anschluss (15) zur Zufuhr von zu filtrierender Flüssigkeit und einen Anschluss (18) zur Abfuhr von filtrierter Flüssigkeit aufweist, und wobei die Gehäusebasis (2) quer zur Gehäuselängsachse (20) eine der Stirnfläche (9) des eingesetzten Filters benachbarte Basisfläche (19) aufweist,
**dadurch gekennzeichnet,**
**dass** die Basisfläche (19) nach innen zur Gehäuselängsachse (20) hin gegenüber einer quer zur Gehäuselängsachse (20) angeordneten horizontalen Ebene (25) geneigt ist und die Dichtungsnut (10) zur Gehäuselängsachse (20) hin von einem Innenkragen (23) mit einer umlaufenden Innenfläche (22) begrenzt ist, die die äußere Begrenzung (24) für die Basisfläche (19) bildet, wobei die umlaufende Innenfläche (22) im Wesentlichen vertikal und somit gemäß der Gehäuselängsachse (20) verläuft.

2. Filtergehäuse nach Anspruch 1,
**dadurch gekennzeichnet,**
**dass** die Basisfläche (19) ringförmig mit einer zentralen Öffnung (21) zu einem Flüssigkeitsabfluss (17) hin ausgebildet ist.

3. Filtergehäuse nach einem der Ansprüche 1 und 2,
**dadurch gekennzeichnet,**
**dass** die Basisfläche (19) zur Gehäuselängsachse (20) hin um einen Winkel (26) geneigt ist, der größer als 2° ist.

4. Filtergehäuse nach Anspruch 3,
**dadurch gekennzeichnet,**
**dass** die Basisfläche (19) zur Gehäuselängsachse (20) hin um einen Winkel (26) von größer als 4° geneigt ist.

5. Filtergehäuse nach Anspruch 4,
**dadurch gekennzeichnet,**
**dass** die Basisfläche (19) zur Gehäuselängsachse (20) hin um einen Winkel (26) von 5° geneigt ist.

6. Filtergehäuse nach einem der Ansprüche 1 bis 5,
**dadurch gekennzeichnet,**
**dass** die Dichtung (11) als eine O-Ringdichtung (12) ausgebildet ist.

## Claims

1. Filter housing (1) for exchangeable filters with a housing base (2) for mounting the filter and a housing dome (3) covering the filter, wherein the housing base (2) and the housing dome (3) are connectible together by way of a sterile clamping connection (14), comprising a groove clamping support (5) at the housing base side and a collar clamping support (6) at the housing dome side, which supports are fixed relative to one another in the connected position thereof by way of a clasp (4), wherein the groove clamping support (5) has a sealing groove (10) with a seal (11), by way of which the groove clamping support (5) can be sealed relative to the collar clamping support (6), wherein the housing base (2) has a connection (15) for the feed of liquid to be filtered and a connection (18) for the discharge of filtered liquid, and wherein the housing base (2) has transversely to the housing longitudinal axis (20) a base surface (19) adjacent to the end surface (9) of the inserted filter,
**characterised in that**
the base surface (19) is inclined inwardly towards the housing longitudinal axis (20) relative to a horizontal plane (25) arranged transversely to the housing longitudinal axis (20) and the sealing groove (10) is bounded towards the housing longitudinal axis (20) by an inner collar (23) with an encircling inner surface (22) forming the outer boundary (24) for the base surface (19), wherein the encircling inner surface (22) extends substantially vertically and thus in accordance with the housing longitudinal axis (20).

2. Filter housing according to claim 1, **characterised in that** the base surface (19) is formed to be annular with a central opening (21) towards a liquid outflow (17).

3. Filter housing according to one of claims 1 and 2, **characterised in that** the base surface (19) is inclined towards the housing longitudinal axis (20) by an angle (26) which is greater than 2°.

4. Filter housing according to claim 3, **characterised in that** the base surface (19) is inclined towards the housing longitudinal axis (20) by an angle (26) which is greater than 4°.

5. Filter housing according to claim 4, **characterised in that** the base surface (19) is inclined towards the housing longitudinal axis (20) by an angle (26) which is greater than 5°.

6. Filter housing according to any one of claims 1 to 5, **characterised in that** the seal (11) is constructed as an O-ring seal (12).

## Revendications

1. Boîtier de filtre (1) pour filtres interchangeables, comprenant une base de boîtier (2) pour le logement du filtre et un dôme de boîtier (3) recouvrant le filtre, dans lequel la base de boîtier (2) et le dôme de boîtier (3) peuvent être reliés l'un à l'autre au moyen d'une liaison par serrage aseptique (14), qui comprend côté base de boîtier un manchon de serrage rainuré (5) et côté dôme de boîtier un manchon de serrage à collet (6), lesquels sont fixés l'un par rapport à l'autre dans leur position reliée par une pince (4), dans lequel le manchon de serrage rainuré (5) comprend une rainure d'étanchéité (10) pourvue d'un joint (11) par l'intermédiaire duquel le manchon de serrage rainuré (5) peut être étanchéifié par rapport au manchon de serrage à collet (6), dans lequel la base de boîtier (2) comprend un raccord (15) pour l'amenée du liquide à filtrer et un raccord (18) pour l'évacuation du liquide filtré, et dans lequel la base de boîtier (2) comprend transversalement à l'axe longitudinal de boîtier (20) une surface de base (19) voisine de la surface frontale (9) du filtre inséré,
**caractérisé**
**en ce que** la surface de base (19) est inclinée vers l'intérieur en direction de l'axe longitudinal de boîtier (20) par rapport à un plan horizontal (25) agencé transversalement à l'axe longitudinal de boîtier (20) et la rainure d'étanchéité (10) est délimitée en direction de l'axe longitudinal de boîtier (20) par une collerette intérieure (23) comprenant une surface intérieure périphérique (22), qui forme la délimitation extérieure (24) pour la surface de base (19), la surface intérieure périphérique (22) s'étendant sensiblement verticalement et donc en fonction de l'axe longitudinal de boîtier (20).

2. Boîtier de filtre selon la revendication 1,
**caractérisé**
**en ce que** la surface de base (19) présente une réalisation annulaire pourvue d'une ouverture centrale (21) en direction d'une évacuation de liquide (17).

3. Boîtier de filtre selon l'une des revendications 1 et 2,
**caractérisé**
**en ce que** la surface de base (19) est inclinée d'un angle (26) supérieur à 2° en direction de l'axe longitudinal de boîtier (20).

4. Boîtier de filtre selon la revendication 3,
**caractérisé**
**en ce que** la surface de base (19) est inclinée d'un angle (26) supérieur à 4° en direction de l'axe longitudinal de boîtier (20).

5. Boîtier de filtre selon la revendication 4,
**caractérisé**
**en ce que** la surface de base (19) est inclinée d'un angle (26) de 5° en direction de l'axe longitudinal de boîtier (20).

6. Boîtier de filtre selon l'une quelconque des revendications 1 à 5,
**caractérisé**
**en ce que** le joint (11) est réalisé sous la forme d'un joint torique (12).
